**Europäisches Patentamt**

**European Patent Office**

**Office européen des brevets**

(19)

(11) Veröffentlichungsnummer: **0 096 206**

**A2**

(12) # EUROPÄISCHE PATENTANMELDUNG

(21) Anmeldenummer: **83104030.8**

(22) Anmeldetag: **25.04.83**

(51) Int. Cl.³: **F 16 H 21/36**

(30) Priorität: **03.05.82 DE 3216459**

(43) Veröffentlichungstag der Anmeldung:
**21.12.83 Patentblatt 83/51**

(84) Benannte Vertragsstaaten:
**DE FR GB IT**

(71) Anmelder: **HOECHST AKTIENGESELLSCHAFT**
**Postfach 80 03 20**
**D-6230 Frankfurt am Main 80(DE)**

(72) Erfinder: **Witte, Horst**
**Eichenweg 24**
**D-6200 Wiesbaden(DE)**

(54) **Stufenloses Getriebe.**

(57) Die Erfindung betrifft ein stufenloses Getriebe zur Umwandlung einer Drehbewegung in eine vom Drehwinkel abhängige Linearbewegung. Das Getriebe umfaßt eine Schwinge 6, die um einen Drehpunkt 7 drehbar ist und die auf der Antriebs- und der Abtriebsseite des Getriebes entlang je einer Führung 5 bzw. 5' gleitend geführt ist. In jeder Führung gleitet ein Gleitkörper 4a bzw. 4a', an dem ein Band 1 bzw. 1' befestigt ist. Die Schwinge 6 ist zu beiden Seiten des Drehpunktes mit einem Schlitz 8,10 mit Führungen 6a, 6a' versehen, in die das zugehörige Wälzlager 4,4' eingreift. Der Abstand der beiden Führungen 5,5' zueinander ist verstellbar, indem die Führung 5 entlang einer Positionierschiene 9 mit Hilfe einer Spindel verschiebbar ist, die auf der Unterseite einer Grundplatte 20 des Getriebes angeordnet ist und mit der Führung 5 verbunden ist.

./...

EP 0 096 206 A2

FIG.1

HOECHST AKTIENGESELLSCHAFT
KALLE Niederlassung der Hoechst AG

Hoe 82/K 019  - 1 -  22. April 1983
WLK-DI.Z.-is

Stufenloses Getriebe

Die Erfindung betrifft ein stufenloses Getriebe zur
Umwandlung einer Drehbewegung in eine vom Drehwinkel
abhängige Linearbewegung.

Für bestimmte Aufgaben werden Getriebe benötigt, mit
denen eine Antriebsdrehbewegung in eine linearproportionale Abtriebsbewegung umgewandelt werden kann, die
geradlinig ist und deren Übersetzungsverhältnis zur
Antriebsdrehbewegung stufenlos eingestellt werden
kann.

Dies kann im Stand der Technik dadurch erreicht werden, daß die Drehbewegung beispielsweise in ein Stufengetriebe eingeleitet wird, dem ein in der Übersetzung stufenlos einstellbares Getriebe nachgeschaltet
ist, das den Stufensprung des ersten Getriebes mit
seinem Übersetzungsbereich überdeckt und die Abtriebsbewegung linearisiert.

Bei der Herstellung von elektrofotografischen Kopien
von Mikrofilmen, d.h. auf dem Gebiet der Mikrofilmrückvergrößerung, ist es erforderlich, zu einer vorgegebenen Prozeßgeschwindigkeit des Fotoleiterbandes,
auf das die vergrößerten Filmbilder spaltweise abgebildet werden, mittels einer Drehübertragung eine korrespondierende, langsamere lineare Abtastgeschwindigkeit der zu projizierenden Filmlochkarte zu erzeugen.
Die lineare Abtastgeschwindigkeit kann dabei um einen

HOECHST AKTIENGESELLSCHAFT
KALLE Niederlassung der Hoechst AG

- 2 -

Faktor 6 bis 36, insbesondere 7,4 bis 29,6, langsamer sein als die Prozeßgeschwindigkeit des Fotoleiterbandes. Es ist offensichtlich, daß bei der Mikrofilmrückvergrößerung die Anzahl der in ihrer Güte unterschiedlichen Übertragungsglieder zur Übersetzung der Drehgeschwindigkeit in eine lineare Abtriebsgeschwindigkeit die Übertragungsgenauigkeit beeinflußt, insbesondere wenn bedacht wird, daß Ungenauigkeiten der einzelnen Übertragungsglieder sich in der Praxis kumulieren können, so daß maximale Abweichungen auftreten können, die in ihrer Summe die zulässige Toleranzgrenze überschreiten und somit ein Übersetzungsverhältnis zustandekommen kann, das nicht einwandfrei reproduzierbare Mikrofilmrückvergrößerungen liefert. Die in der Mikrofilmrückvergrößerung einsetzbaren Stufengetriebe ergeben eine gestufte Übersetzung der Rückvergrößerungsfaktoren durch die geeignete Wahl der Zahnradpaare, so daß Rückvergrößerungen entsprechend genormter Formatreihen, wie beispielsweise der DIN-Formatreihe erhalten werden. Derartige Stufenwechselgetriebe sind wegen der geforderten Präzision der verwendeten Zahnradpaare sehr teuer.

Die Entwicklung von Stufenwechselgetrieben dieser Art ist mit Mitteln des Standes der Technik möglich, wie sie beispielsweise in dem "Getriebebeispiel-Atlas" 1973, K. Hain, VDI-Verlag Düsseldorf, beschrieben sind. Diese Mittel ermöglichen Rückvergrößerungen entsprechend vorgegebener Formatreihen. Die in diesem Atlas beschriebenen, zum Teil sehr komplizierten Lösun-

HOECHST AKTIENGESELLSCHAFT
KALLE Niederlassung der Hoechst AG

- 3 -

gen, eine Drehbewegung in eine Linearbewegung umzusetzen, erfüllen höchstens zwei der drei Forderungen, die eingangs beschrieben wurden. Insbesondere bei den Beispielen, nach denen die geradlinige Abtriebsbewegung stufenlos einstellbar ist, zeigt sich, daß das hierdurch erzeugte Übersetzungsverhältnis längs des Arbeitsweges nicht mathematisch exakt einhaltbar ist, sich also der Proportionalitätsfaktor zwischen An- und Abtriebsbewegung ändert.

Aufgabe der Erfindung ist es, ein stufenloses Getriebe zu schaffen, das neben der gestuften Veränderung nach vorgegebenen Formatreihen ohne Wechselgetriebe eine ungestufte Veränderung der Übersetzungsfaktoren in formatüberdeckender Weise ermöglicht, wobei das eingestellte Übersetzungsverhältnis längs des Arbeitsweges erhalten bleiben soll.

Diese Aufgabe wird erfindungsgemäß dadurch gelöst, daß die Antriebsdrehbewegung in eine geradlinige Antriebsbewegung umgewandelt wird, die mittels einer Schwinge reduziert wird, die um einen Drehpunkt drehbar ist, der die Schwinge in zwei Hebelarme unterteilt und daß die Schwinge auf der Antriebsseite und der Abtriebsseite des Getriebes jeweils entlang Führungen gleitend geführt ist.

In Ausgestaltung der Erfindung ist in der Führung auf der Antriebsseite des Getriebes ein Gleitkörper angeordnet, der in der Führung spielfrei gleitet und an dem ein Band befestigt ist, auf das eine Zugkraft während des Getriebebetriebs ausgeübt wird. Anstelle eines Gleitkörpers kann in der Führung auf der Antriebsseite des Getriebes ein Körper mit spielfrei angebrachten Wälzlagern angeordnet sein, an dem ein Band befestigt ist.

Die Abtriebsseite ist ähnlich aufgebaut und in der Führung auf der Abtriebsseite des Getriebes ist gleichfalls ein Gleitkörper vorhanden, an dem ein Ende eines Bandes befestigt ist, dessen anderes Ende mit einem verfahrbaren Wagen oder Schlitten verbunden ist.

In Weiterbildung der Erfindung weist die Schwinge zu beiden Seiten des Drehpunktes je einen Schlitz mit Führung auf, in die das jeweils zugehörige Wälzlager eingreift. Der veränderliche Abstand $r_0$ von dem Drehpunkt der Schwinge zu dem Wälzlager auf der Antriebsseite und der veränderliche Abstand $r_1$ von dem Drehpunkt zu dem Wälzlager auf der Abtriebsseite entsprechen der Länge je eines Hebelarms und das Verhältnis der Abstände $r_1$ zu $r_0$ gibt das konstante Übersetzungsverhältnis in jeder Position der Schwinge wieder.

Vorteilhafterweise ist der Abstand der beiden Führungen zueinander einstellbar. Dazu ist die Führung der Antriebsseite gegenüber ihrer Ausgangsposition verschiebbar und in ihrer jeweiligen Position feststellbar.

Mit einem derartigen stufenlosen Getriebe wird bei der

- 5 -

Rückvergrößerung von Filmlochkarten der Vorteil erzielt, daß auch auf Normformat rückvergrößert werden kann, wenn eine nicht der Zeichnungsformatnorm entsprechende Vorlage verfilmt wurde oder wenn bei der Verfilmung zu klein oder zu groß aufgenommen wurde. Weiter ist die Herstellung von nichtgenormten Formaten beispielsweise erforderlich, um die Rückvergrößerung mit anderen Zeichnungen maßstabsvergleichbar zu machen.

Die Erfindung wird im folgenden anhand eines zeichnerisch dargestellten Ausführungsbeispiels näher erläutert.

Es zeigen:

Fig. 1    eine Seitenansicht eines Getriebes nach der Erfindung in einer ersten Position,

Fig. 2    eine Seitenansicht des Getriebes in einer zweiten Position,

Fig. 3    eine Draufsicht nach Fig. 1, und

Fig. 4    eine kinematische Darstellung des Getriebes.

Bevor das zeichnerisch dargestellte Getriebe näher erläutert wird, soll noch kurz auf seine Anwendung für die Mikrofilmrückvergrößerung eingegangen werden.

Bei dem Einsatz des Getriebes für die Rückvergrößerung von Filmlochkarten auf Kopienformate einer Normreihe wie die DIN-Reihe, lauten die allgemein üblichen Rückvergrößerungsfaktoren 7,4;10,5;14,8;21 und 29,6. Diese Rückvergrößerungsfaktoren lassen sich als Produkte von $(\sqrt{2})^n \cdot 7,4$ schreiben. Für n=0 bis 4 ergeben sich die Vielfachen von $(\sqrt{2})^n$ zu $1, \sqrt{2}, 2, 2\sqrt{2}$ und 4. Somit vereinfacht sich das Problem der Rückvergrößerung dahingehend, den gemeinsamen Faktor 7,4 der Rückvergrößerungsfaktoren in der gemeinsamen Antriebsübersetzung zu berücksichtigen, beispielsweise derart, daß auf der Antriebsseite die Umfangsbewegung einer Fotoleitertrommel, auf welche die Filmlochkarte projiziert wird, durch Zahnräder, Zahnketten oder dgl. in eine um den Faktor 7,4 reduzierte Linearbewegung umgesetzt wird, die dann über das Band eine Zugkraft auf die Antriebsseite des Getriebes ausübt. Dieses ermöglicht dann eine variable Übersetzung im Bereich 1 bis 4 und erfüllt somit die Funktionen eines Stufengetriebes mit einem stufenlosen Zusatzgetriebe. Es wird dann aus der von der vorgegebenen Drehbewegung abgeleiteten Linearbewegung mit konstanter Geschwindigkeit eine ebensolche mit 1- bis 0,25facher Geschwindigkeit erzeugt.

Während der Belichtung bzw. Projektion der Filmlochkarte auf die Fotoleitertrommel legt die erstere je nach verfilmten Zeichnungsformat DIN A0 bis DIN A4 eine Strecke von höchstens etwa 40 mm oder mindestens etwa 14 mm mit konstanter Geschwindigkeit zurück. Dabei variiert die Größe der konstanten Geschwindigkeit zwischen 25 und 6,25 mm/s, je nach gewähltem Rückver-größerungsfaktor 7,4 bis 29,6 und bei der vorgegebenen Fotoleitergeschwindigkeit.

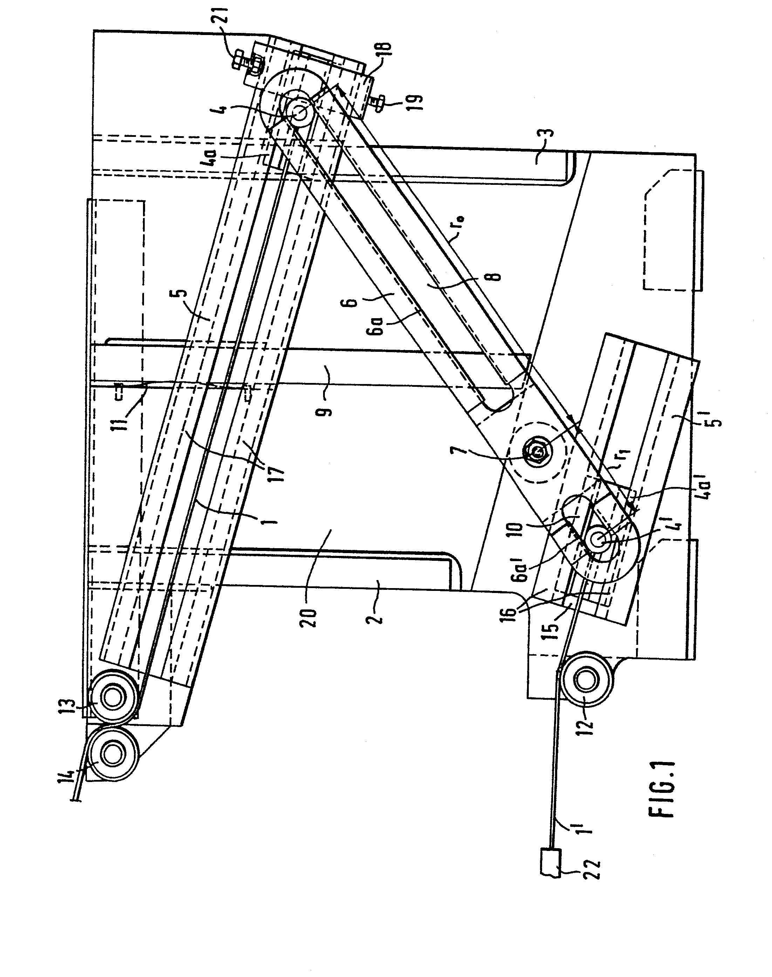

Das Getriebe in Fig. 1 besteht aus einer Schwinge 6, die um einen Drehpunkt 7 drehbar gelagert ist. Der Drehpunkt 7 unterteilt die Schwinge 6 in zwei Hebelarme, die veränderliche Abstände zu Wälzlagern 4 bzw. 4' besitzen. Die Schwinge 6 ist auf der Antriebsseite und auf der Abtriebsseite des Getriebes jeweils entlang Führungen 5 bzw. 5' mittels mit den Wälzlagern 4 bzw. 4' verbundenen Gleitkörpern 4a bzw. 4a' gleitend geführt. Hierzu ist vorgesehen, daß in der Führung 5 auf der Antriebsseite des Getriebes der Gleitkörper 4a gleitet und an der Führung 6a das Wälzlager 4 abwälzt und daß in der Führung 5' auf der Abtriebsseite des Getriebes der Gleitkörper 4a' gleitet und in der Führung 6a' das Wälzlager 4' abwälzt. Ein Seil oder Band 1 ist auf der Antriebsseite zwischen zwei Umlenkrollen 13 und 14 hindurchgeführt und in der Führung 5 bis zu dem Gleitkörper 4a geführt und an diesem be-festigt. Die Führung 5 wird von zwei Führungsschienen 17 gebildet, zwischen denen ein bestimmter Abstand eingehalten wird. Ein Anschlag 18 begrenzt das Ende der Führung, das den Umlenkrollen 13 und 14 gegenüberliegt. Der Anschlag 18 ist entlang den Führungsschienen 17 der Führung 5 verschiebbar und wird beispielsweise durch zwei Stellschrauben 19 und 21 jeweils in der gewünschten Position fixiert. Der Anschlag 18 kann selbstverständlich auch lagefest an den Führungsschie-nen 17 befestigt sein.

HOECHST AKTIENGESELLSCHAFT
KALLE Niederlassung der Hoechst AG

- 8 -

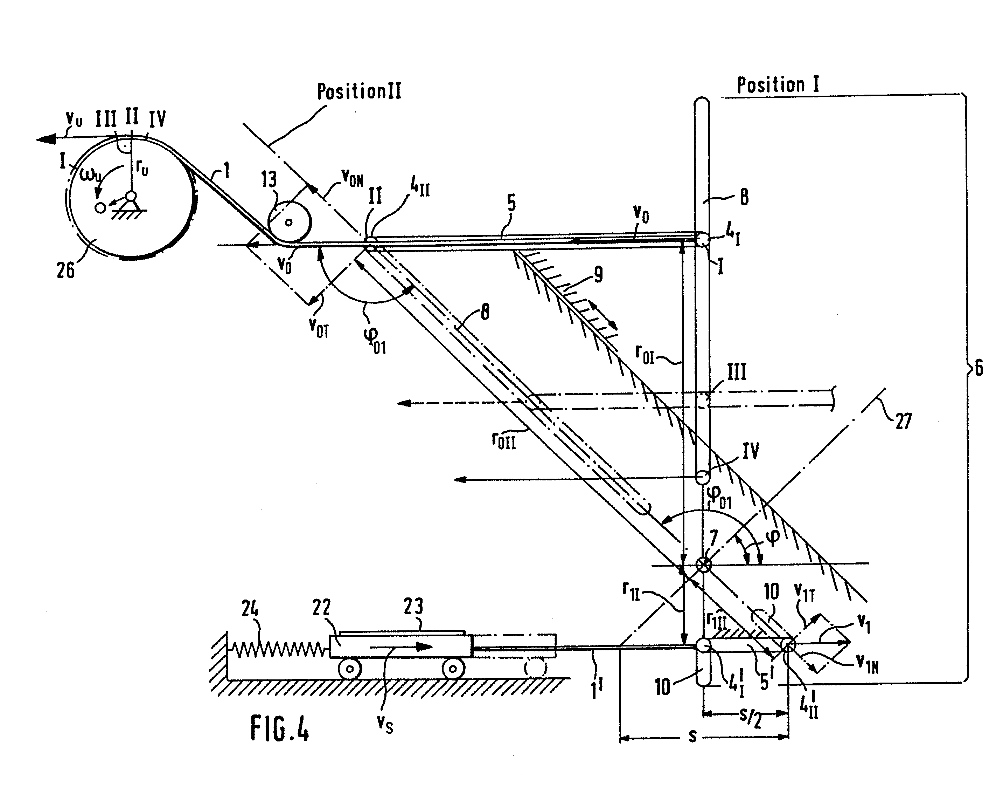

Das Seil oder Band 1 wird von einer in Fig. 1 nichtgezeigten Seilscheibe, die an einer gleichfalls nichtdargestellten Kupplungsankerscheibe befestigt ist, mit einer vorgegebenen Geschwindigkeit aufgewickelt. Das Band 1 bewegt hinter der Umlenkrolle 13 den Gleitkörper 4a mit dem Wälzlager 4 mit der gleichen Geschwindigkeit in der Führung 5. Dabei bewegt das Wälzlager 4 die Schwinge 6 um ihren Drehpunkt 7 aus ihrer Anfangsposition in eine Position, wie sie beispielsweise in Position II der Fig. 4 gezeigt ist. Anstelle eines Gleitkörpers 4a kann in der Führung 5 auf der Antriebsseite des Getriebes ein Körper mit spielfrei angebrachten Wälzlagern angeordnet sein, an dem das Band 1 befestigt ist. Ebenso ist anstelle des Lagers 4 ein gelenkig gelagertes Gleitstück denkbar. Die Drehung der Schwinge 6 wird durch eine Tangentialkomponente der Geschwindigkeit bewirkt, wobei die Normalkomponente in der Längsführung der Schwinge 6 aufgenommen wird. Dies wird im einzelnen noch nachstehend anhand von Fig. 4 näher beschrieben werden. Eine entsprechende Aufteilung der Geschwindigkeitskomponenten findet auch auf der Abtriebsseite des Getriebes statt, wo ein Ende eines Bandes 1' an dem Gleitkörper 4a' befestigt ist und dessen anderes Ende mit einem verfahrbaren Schlitten, wie er in Fig. 4 als Wagen 22 symbolisch gezeigt ist, verbunden ist. Auf diesem verfahrbaren Wagen 22 liegt eine Filmlochkarte 23 auf, die rückvergrößert werden soll. Der Wagen 22 wird gegen die Zugkraft einer Feder 24, die an seinem einen Ende angreift, von dem Band 1' nach rechts verfahren. In Fig. 1 ist der Wagen 22, an dem das Seil 1' angreift, nur angedeutet.

Die Führung 5' auf der Abtriebsseite des Getriebes ist kürzer und ähnlich aufgebaut wie die Führung auf der Antriebsseite und besteht aus zwei Führungsschienen 16, die in einem vorgegebenen Abstand zueinander liegen und die Führungsbahn des Gleitkörpers 4a' begrenzen. Ein Führungsblech 15 der Führung 5' kann als Anschlag für den Gleitkörper 4a' vorgesehen und im Gegensatz zu dem Anschlag 18 auf der Antriebsseite lagefest angebracht sein, jedoch ist ein Anschlag nicht in jedem Fall erforderlich. Das Band 1' ist um eine Umlenkrolle 12 geführt, die ebenso wie die Umlenkrolle 14 auf der Antriebsseite auf einer Grundplatte 20 des Getriebes montiert ist.

Anstelle des Gleitkörpers 4a' kann gleichfalls ein Körper mit spielfrei angebrachten Wälzlagern in der Führung 5' vorgesehen werden, an dem das Band 1' befestigt ist.

Die Schwinge 6 besitzt zu beiden Seiten des Drehpunktes 7 je einen Schlitz 8 bzw. 10, mit einer Führung 6a bzw. 6a', an der das zugehörige jeweilige Wälzlager 4 bzw. 4' eingreift.

Die Führung 5 ist entlang einer mittleren Positionierschiene 9 verschiebbar, so daß der Abstand der beiden Führungen 5 und 5' zueinander verstellbar ist. Die Führung 5 wird in ihrer jeweiligen Position auf der Positionierschiene 9 durch eine Blattfeder 11 festgelegt. An den Rändern der Grundplatte 20 befinden sich weitere Positionierschienen 2 und 3, entlang denen die Führung 5 beim Verstellen gleitet.

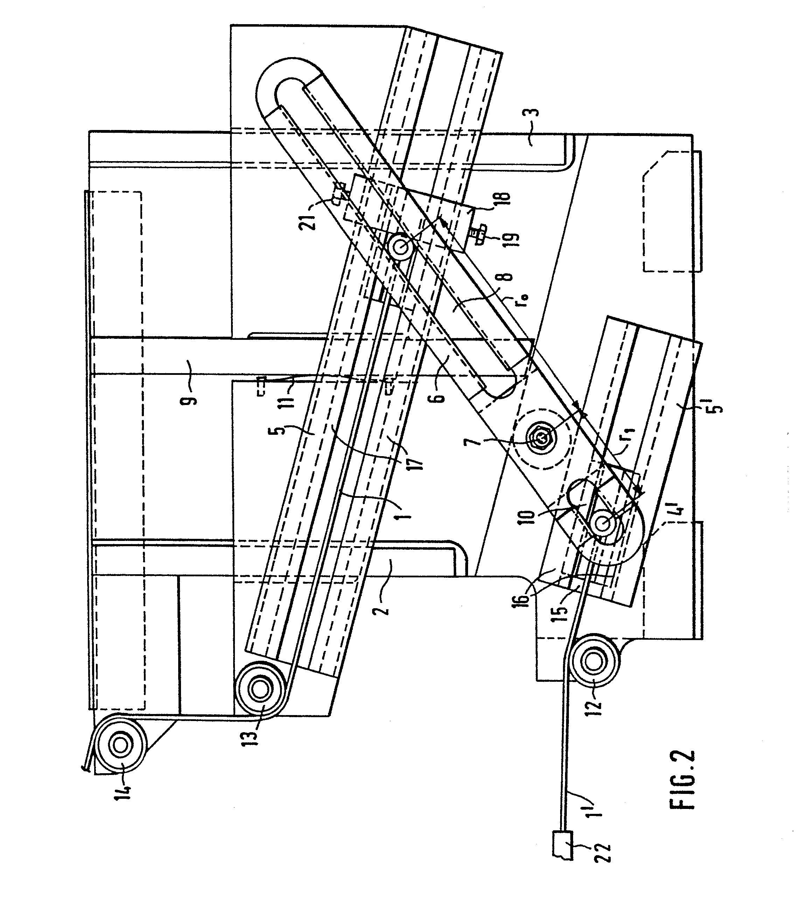

Fig. 2 zeigt eine Seitenansicht des Getriebes in einer gegenüber der Fig. 1 geänderten Position, wobei der Abstand zwischen den Führungen 5 und 5' verkürzt ist. Das Übersetzungsverhältnis ist bei der Änderung der Position dem Abstand zum Drehpunkt 7 linear proportional.

Der veränderliche Abstand $r_0$ von dem Drehpunkt 7 der Schwinge 6 zu dem Wälzlager 4 auf der Antriebsseite und der veränderliche Abstand $r_1$ von dem Drehpunkt 7 zu dem Wälzlager 4' auf der Abtriebsseite entsprechen der Länge je eines Hebelarms und das konstante Verhältnis dieser Abstände $r_1$ zu $r_0$ in jeder Position der Schwinge 6 bildet das konstante Übersetzungsverhältnis in jeder Position der Schwinge 6.

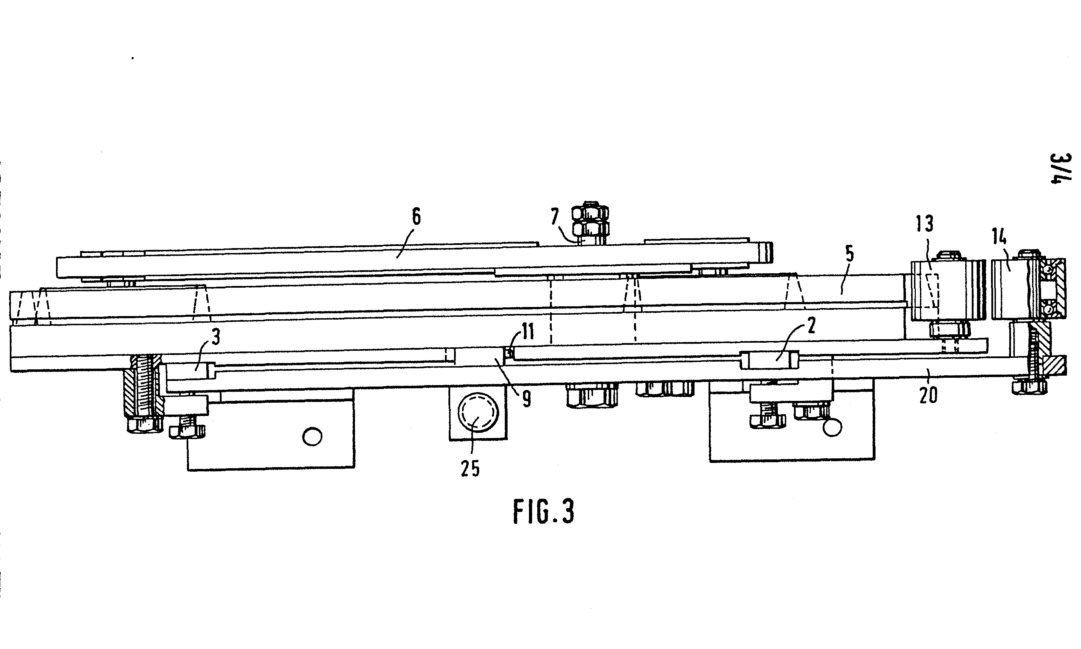

Fig. 3 zeigt eine Draufsicht des Getriebes nach Fig. 1 und läßt auf der Unterseite der Grundplatte 20 eine Spindel 25 erkennen, die über nichtdargestellte Streben die Führung 5 der Antriebsseite gegenüber der Führung 5' verschiebt.

Anhand von Fig. 4, die die Kinematik des Getriebes zeigt, werden dessen Funktionsweise und die Wirkungs-

HOECHST AKTIENGESELLSCHAFT
KALLE Niederlassung der Hoechst AG

- 11 -

linien der Getriebebewegung im folgenden beschrieben. Zur besseren Übersicht wird zunächst davon ausgegangen, daß sich die Schwinge 6 in einer Position I befindet, die senkrecht zur Horizontalen verläuft und daß die Schwinge 6 aus dieser Position I in die Position II um ihren Drehpunkt 7 gedreht wird.

Das Seil oder Band 1 auf der Antriebsseite wird von einer Seilscheibe 26, die an einer nichtdargestellten Kupplungsankerscheibe befestigt ist, mit der Geschwindigkeit $v_u$ aufgewickelt. Das Band 1 bewegt hinter der Umlenkrolle 13 das Wälzlager 4 mit der Geschwindigkeit $v_0 = v_u$ in der Führung 5. Dabei bewegt das Wälzlager 4 die Schwinge 6 um den Drehpunkt 7 aus der Position I in die Position II. Die Positionen I und II des Wälzlagers sind durch Indizes I und II der Bezugszahl 4 des Wälzlagers in der Schreibweise $4_I$ und $4_{II}$ kenntlich gemacht.

Die Drehung der Schwinge 6 wird entsprechend der Vektordarstellung in der Stellung II des Wälzlagers 4 durch die Tangentialkomponente $v_{0T}$ der Geschwindigkeit $v_0$ bewirkt, während die Normalkomponente $v_{0N}$ in Längsrichtung der Schwinge 6 verläuft und von dieser aufgenommen wird. Eine entsprechende Aufteilung der Geschwindigkeit findet auf der Abtriebsseite der Schwinge 6 statt und ist durch die Geschwindigkeit $v_1$ und ihre Komponenten $v_{1T}$ und $v_{1N}$ dargestellt.

Da, betrachtet über den Verschiebeweg des Wälzla-

HOECHST AKTIENGESELLSCHAFT
KALLE Niederlassung der Hoechst AG

- 12 -

gers 4, ein stetig kleiner werdender Anteil der konstanten Antriebsgeschwindigkeit $v_0$ für die Drehung genutzt wird und zudem der Hebelarm $r_{0II}$ stetig länger wird, dreht sich die Schwinge 6 mit stetig abnehmender Winkelgeschwindigkeit $\omega_0$.

Da auf der Abtriebsseite aus Symmetriegründen ein entsprechender Vorgang abläuft, d.h. der Hebelarm $r_{1II}$ zwischen dem Drehpunkt 7 und dem Wälzlager 4' in seiner Position II stetig zunimmt, ist das Verhältnis dieser Größen zu jedem Zeitpunkt der Bewegung des Getriebes genau konstant und somit bei konstanter Antriebsgeschwindigkeit die Abtriebgeschwindigkeit gleichbleibend.

Wie aus den Figuren 1 und 2 hervorgeht, ist die Anfangslage der Schwinge 6 nicht wie bei der kinematischen Darstellung gezeichnet, senkrecht zur Horizontalen, sondern liegt, wie durch die strichpunktierte Linie 27 angedeutet, bei einem Winkel $\varphi_s = 45^o$. Durch diese Lage wird der mögliche Stellweg $\frac{s}{2}$ des Schlittens 22, der über das Band 1' mit dem Gleitkörper 4a' verbunden ist, auf den Wert s verdoppelt, beispielsweise auf s = 40 mm. In der Position II schließt dann die Schwinge 6 mit der Horizontalen einen Winkel $\varphi_{01} = 135^o$ ein. Im folgenden werden die Geschwindigkeitsverhältnisse auf der Antriebs- und Abtriebsseite zu jedem Zeitpunkt der Getriebebewegung angegeben. Die Indizes I und II stehen jeweils für die Position I bzw. II in Fig. 4. Es gilt für die Antriebsseite:

- 13 -

$$\omega_0 = \omega_1, \quad \varphi_0 = \varphi_1,$$

$$\frac{r_{1II}}{r_{0II}} = \frac{r_{1I}}{r_{0I}} \tag{1}$$

$$v_u = \omega_u r_u \tag{2}$$

$$v_u = v_0 = \frac{v_{0T}}{\sin \varphi_0} = \frac{\omega_0\, r_{0II}}{\sin \varphi_0} \tag{3}$$

Für die Abtriebsseite gelten folgende Beziehungen:

$$v_s = v_1, \quad v_1 = \omega_1 r_{1II} \quad \text{und mit Gl. (1) und (3)}$$

$$v_s = \frac{v_{1T}}{\sin \varphi_1} = \frac{\omega_1\, r_{1II}}{\sin \varphi_1} = \frac{\omega_0\, r_{1I}}{\sin \varphi_0\, r_{0I}} \; r_{0II}$$

$$v_s = \frac{v_{0T}}{\sin \varphi_0} \; \frac{r_{1I}}{r_{0I}} \tag{4}$$

$$v_s = v_u \, \frac{r_{1I}}{r_{0I}} = \omega_u \, r_u \, \frac{r_{1I}}{r_{0I}} = \text{konst. } \omega_u \tag{5}$$

HOECHST AKTIENGESELLSCHAFT
KALLE Niederlassung der Hoechst AG

- 14 -

Gleichung (5) liefert das Ergebnis, daß die Abtriebsgeschwindigkeit $v_s$ für den Schlitten 22 proportional
zur Winkelgeschwindigkeit $\omega_u$ der Seilscheibe 26 ist,
bzw. die Abtriebsgeschwindigkeit $v_s$ zu jedem Zeitpunkt
das Produkt aus einem konstanten Faktor $\frac{r_{1I}}{r_{0I}}$ und der
Antriebsgeschwindigkeit $v_u$ ist.

In einem praktischen Ausführungsbeispiel ist
$r_{1I} = 20$ mm und $r_{0I} = 80$ mm, woraus aus Gleichung (5)
für die Abtriebsgeschwindigkeit

$$v_s = \frac{1}{4} v_u$$

folgt. Die Führung 5 kann mittels der Positionierschiene 9 über die Position III bis zur Position IV
und darüber hinaus parallel verschoben und in beliebiger Stellung fixiert werden. Für die Fig. 4 ist die
mögliche Verschiebung entlang der Positionierschiene 9
schraffiert angedeutet. Für die Positionierschiene 9
ist nur deren Wirkungslinie in Fig. 4 eingetragen. Das
Übersetzungsverhältnis ist der Schienenposition linear
proportional und zum Beispiel in der Stellung IV
gleich 1.

Die Abtriebsgeschwindigkeit $v_s$ läßt sich somit im vorgegebenen Einstellbereich entsprechend den Eingangsbedingungen gewinnen und mit hoher Übertragungsgenauigkeit realisieren. Damit ist die Möglichkeit gegeben,
auf dem Schlitten 22 die Filmlochkarte 23 entsprechend
dem jeweils eingestellten Rückvergrößerungsfaktor zu
transportieren.

Aus Fig. 4 ist auch ersichtlich, daß Änderungen der Tangentialkraft und der Winkelgeschwindigkeit auf der Antriebsseite auf der gegenüberliegenden Abtriebsseite kompensiert werden, so daß die Voraussetzungen für eine gleichmäßige Abtastung der Filmlochkarte 23 gegeben sind.

Zusammenfassend ist festzustellen, daß mit dem stufenlosen Getriebe nach der Erfindung eine Umwandlung einer Drehbewegung in eine vom Drehwinkel abhängige geradlinige Bewegung erzielt wird, wobei das Verhältnis von Winkelgeschwindigkeit zu zugehöriger Lineargeschwindigkeit im Stellbereich mathematisch exakt konstant ist und daß durch stufenlose Verstellung der Führung 5 ein anderes konstantes Verhältnis eingestellt werden kann. Dazu ist es nur erforderlich, die Drehbewegung in bekannter Weise in eine Linearbewegung umzuformen und anschließend das Verhältnis zweier Linearbewegungen zu bilden, wofür die Schwinge 6 des Getriebes eingesetzt wird. Die Antriebslinearbewegung greift dabei am ersten Hebel an der Schwinge 6 derart an, daß sie in einer Bezugsposition senkrecht auf den Hebel einwirkt und in benachbarten Positionen ihre Wirkrichtung und Größe unabhängig von der Winkeländerung des Hebelarms beibehält. Die gleichen Vorgänge laufen auch auf der Abtriebsseite ab, und zwar entsprechend dem Verhältnis der Hebelarme. Im Stellbereich ändern sich die Winkelgeschwindigkeit und die wirksamen Längen der Hebelarme stetig. Zur Einstellung eines anderen konstanten Verhältnisses zwischen der Antriebs- und der Abtriebsgeschwindigkeit erfolgt eine Parallelverschiebung der Wirkrichtung einer der beiden Linearbewegungen.

---

HOECHST AKTIENGESELLSCHAFT
KALLE Niederlassung der Hoechst AG

Hoe 82/K 019          - 17 -          22. April 1983
                                      WLK-DI.Z.-is

Patentansprüche

1. Stufenloses Getriebe zur Umwandlung einer Drehbewegung in eine vom Drehwinkel abhängige Linearbewegung, dadurch gekennzeichnet, daß die Antriebsbewegung in eine geradlinige Antriebsbewegung umgewandelt wird, die mittels einer Schwinge reduziert wird, die um einen Drehpunkt (7) drehbar ist, der die Schwinge in zwei Hebelarme unterteilt und daß die Schwinge auf der Antriebsseite und der Abtriebsseite des Getriebes jeweils entlang Führungen (5,5';6a,6a') gleitend geführt ist.

2. Stufenloses Getriebe nach Anspruch 1, dadurch gekennzeichnet, daß in der Führung (5) auf der Antriebsseite des Getriebes ein Gleitkörper (4a) angeordnet ist, der in der Führung (5) spielfrei gleitet und an dem ein Band (1) befestigt ist, auf das eine Zugkraft während des Getriebebetriebs ausgeübt wird.

3. Stufenloses Getriebe nach Anspruch 2, dadurch gekennzeichnet, daß jeder Gleitkörper (4a,4a') ein Wälzlager (4,4') zur Mitnahme der Schwinge (6) aufweist.

4. Stufenloses Getriebe nach Anspruch 1, dadurch gekennzeichnet, daß in der Führung (5) auf der Antriebsseite des Getriebes ein Körper mit spielfrei angebrachten Wälzlagern angeordnet ist, an dem ein Band (1) befestigt ist.

5. Stufenloses Getriebe nach Anspruch 1, dadurch gekennzeichnet, daß in der Führung (5) auf der Antriebsseite des Getriebes ein Körper mit einem gelenkig gelagerten Gleitstück zur Mitnahme der Schwinge (6) angeordnet ist.

6. Stufenloses Getriebe nach Anspruch 1, dadurch gekennzeichnet, daß in der Führung (5') auf der Abtriebsseite des Getriebes ein Gleitkörper (4a) vorhanden ist, an dem ein Ende eines Bandes (1') befestigt ist, dessen anderes Ende mit einem verfahrbaren Schlitten (22) verbunden ist.

7. Stufenloses Getriebe nach den Ansprüchen 1 bis 5, dadurch gekennzeichnet, daß die Schwinge (6) zu beiden Seiten des Drehpunktes (7) je einen Schlitz (8;10) mit Führung (6a;6a') aufweist, in die jeweils das zugehörige Wälzlager (4,4') oder das gelenkig gelagerte Gleitstück eingreift.

8. Stufenloses Getriebe nach Anspruch 7, dadurch gekennzeichnet, daß der veränderliche Abstand $r_0$ von dem Drehpunkt (7) der Schwinge (6) zu dem Wälzlager (4) auf der Antriebsseite und der veränderliche Abstand $r_1$ von dem Drehpunkt (7) zu dem Wälzlager (4') auf der Abtriebsseite der Wirklänge je eines Hebelarms entsprechen und daß das Verhältnis der Abstände $r_1$ zu $r_0$ das konstante Übersetzungsverhältnis in jeder Position der Schwinge (6) wiedergibt.

9. Stufenloses Getriebe nach Anspruch 1, dadurch gekennzeichnet, daß der Abstand der beiden Führungen (5,5') zueinander einstellbar ist.

10. Stufenloses Getriebe nach Anspruch 9, dadurch gekennzeichnet, daß die Führung (5) der Antriebsseite gegenüber ihrer Ausgangsposition verschiebbar ist und in ihrer jeweiligen Position feststellbar ist.

11. Stufenloses Getriebe nach Anspruch 10, dadurch gekennzeichnet, daß die Führung (5) entlang einer Positionierschiene (9) mit Hilfe einer Spindel (25) verschiebbar ist, die auf der Unterseite einer Grundplatte (20) des Getriebes angeordnet ist und über Streben mit der Führung (5) verbunden ist.

12. Stufenloses Getriebe nach den Ansprüchen 10 und 11, dadurch gekennzeichnet, daß die Führung (5) durch eine Blattfeder (11), die unter Druck an einer Seite der Positionierschiene (9) anliegt, in ihrer Position fixiert wird.

13. Stufenloses Getriebe nach Anspruch 2, dadurch gekennzeichnet, daß die Führung (5) auf der Antriebsseite an einem Ende von einem verstellbaren Anschlag (18) begrenzt ist, den Stellschrauben (19,21) in seiner Lage festhalten.

---

FIG.1

FIG.2

HOECHST AKTIENGESELLSCHAFT 82/K019

FIG.3

FIG.4